# EUROPEAN PATENT APPLICATION

(11) **EP 4 550 256 A1**
(43) Date of publication of application: **07.05.2025**
(21) Application number: 22949483.6
(22) Date of filing: 01.07.2022
(51) Int. Cl.: G06T 7/00, G06V 40/16

(54) **INFORMATION PROCESSING PROGRAM, INFORMATION PROCESSING METHOD, AND INFORMATION PROCESSING DEVICE**

(71) Applicant: FUJITSU LIMITED, Kawasaki-shi, Kanagawa 211-8588 (JP)
(72) Inventor: SAITO, Junya, Kawasaki-shi, Kanagawa 211-8588 (JP); KAWAMURA, Ryosuke, Kawasaki-shi, Kanagawa 211-8588 (JP); YOUOKU, Sachihiro, Kawasaki-shi, Kanagawa 211-8588 (JP); UCHIDA, Akiyoshi, Kawasaki-shi, Kanagawa 211-8588 (JP); MI, Xiaoyu, Kawasaki-shi, Kanagawa 211-8588 (JP); MURASE, Kentaro, Kawasaki-shi, Kanagawa 211-8588 (JP)
(74) Representative: Hoffmann Eitle
(86) International application number: PCT/JP2022/026491
(87) International publication number: WO 2024/004210

(57) **Abstract**

In AU estimation, a prediction error, which denotes the magnitude of an error in an estimated value with respect to a ground truth value of the intensity of an AU, increases depending on imaging conditions. Therefore, it is important to appropriately install a camera device. A computer executes processing including: acquiring a first face image of a person; specifying a first state of elements of an imaging condition from the first face image; generating a second state of the elements of the imaging condition changed such that the first state is improved; inputting the second state to a machine learning model generated through training for each of AUs that represent movements of facial expression muscles, with states of the elements of the imaging condition for a face image as features and errors in estimated values with respect to ground truth values of intensities of the AUs as ground truth data, to estimate prediction errors for each of the AUs; determining whether or not predetermined criteria are satisfied by all of the prediction errors for each of the AUs; and specifying the elements of the imaging condition suitable to be improved on the first face image, based on a determination result as to whether or not the predetermined criteria are satisfied. This may enable presentation of a problematic point in imaging conditions for a camera device for the AU estimation.

## Description

### TECHNICAL FIELD

The present invention relates to an information processing program, an information processing method, and an information processing device.

### BACKGROUND

Facial expressions play an important role in nonverbal communication. Estimation of facial expressions is a key technique for developing computers that understand people and assist the people. In order to estimate facial expressions, a method for describing facial expressions has to be first stipulated. An action unit (AU) is known as a method for describing facial expressions. The AU indicates a motion on a face involved in expressing facial expressions defined based on anatomical knowledge on facial muscles and, there are 44 kinds of AUs in total, which take numerical values of 0 to 5 from a lowest occurrence intensity. A technique for estimating the AU has also been proposed so far.

A representative form of an AU estimation engine that estimates AUs is based on machine learning based on a large volume of training data, and image data of facial expressions on the face, and occurrence (presence or absence of occurrence) and intensity (occurrence intensity) of each AU, which are determination results for facial expressions, are used as the training data.

In addition, for example, for the purpose of utilization in quantitative evaluation of customer responses, visualization of a mental health state of employees, and the like, there is a need for a service in which a camera device for imaging a face, such as a web camera, is installed and a captured video is analyzed by an AU estimation technique.

### CITATION LIST

### PATENT DOCUMENT

Patent Document 1: Japanese Laid-open Patent Publication No. 2005-063172

### SUMMARY OF INVENTION

### TECHNICAL PROBLEM

However, in the AU estimation, for example, a prediction error, which denotes the magnitude of an error in an estimated value with respect to a ground truth value of the intensity of the AU, increases depending on imaging conditions such as brightness, a distance to the camera device, and hiding of the face. Therefore, it is important to appropriately install the camera device.

In one aspect, an object is to present a problematic point in imaging conditions for a camera device in AU estimation.

### SOLUTION TO PROBLEM

In one mode, an information processing program causes a computer to execute processing including: acquiring a first face image of a person; specifying a first state of elements of an imaging condition from the first face image; generating a second state of the elements of the imaging condition changed such that the first state is improved; inputting the second state to a machine learning model generated through training for each of action units (AUs) that represent movements of facial expression muscles, with states of the elements of the imaging condition for a face image as features and errors in estimated values with respect to ground truth values of intensities of the AUs as ground truth data, to estimate prediction errors for each of the AUs; determining whether or not predetermined criteria are satisfied by all of the prediction errors for each of the AUs; and specifying the elements of the imaging condition suitable to be improved on the first face image, based on a determination result as to whether or not the predetermined criteria are satisfied.

### ADVANTAGEOUS EFFECTS OF INVENTION

In one aspect, a problematic point in imaging conditions for a camera device in AU estimation may be presented.

### BRIEF DESCRIPTION OF DRAWINGS

FIG. 1 is a diagram illustrating an example of a problematic point relevant to a conventional AU estimation technique.
FIG. 2 is a diagram illustrating an exemplary configuration of an information processing system according to the present embodiment.
FIG. 3 is a block diagram illustrating an exemplary configuration of an information processing device 10 according to the present embodiment.
FIG. 4 is a diagram illustrating an example of a method for training a prediction error estimation model according to the present embodiment.
FIG. 5 is a diagram illustrating an example of a method for presenting elements of imaging conditions according to the present embodiment.
FIG. 6 is a diagram illustrating an example of presentation of elements of imaging conditions according to the present embodiment.
FIG. 7 is a diagram illustrating an example of a method for determining a prediction error according to the present embodiment.
FIG. 8 is a diagram illustrating an example of visualization of a course of determination according to the present embodiment.
FIG. 9 is a diagram illustrating an example of visualization of imaging conditions that have affected the prediction errors according to the present embodiment.
FIG. 10 is a flowchart illustrating an example of a flow of training processing according to the present embodiment.
FIG. 11 is a flowchart illustrating an example of a flow of presentation processing according to the present embodiment.
FIG. 12 is a diagram illustrating an exemplary hardware configuration of the information processing device 10 according to the present embodiment.
FIG. 13 is a configuration diagram of a stress state analysis system for employees.
FIGs. 14A and 14B are operation flowcharts of the stress state analysis system.
FIG. 15 is a diagram illustrating a customer facial expression analysis system in a retail store.
FIGs. 16A and 16B are operation flowcharts of the customer facial expression analysis system.

### DESCRIPTION OF EMBODIMENTS

Exemplary embodiments of an information processing program, an information processing method, and an information processing device according to the present embodiments will be described below in detail with reference to the drawings. Note that the present embodiments are not limited by these exemplary embodiments. In addition, the exemplary embodiments can be appropriately combined with each other unless otherwise contradicted.

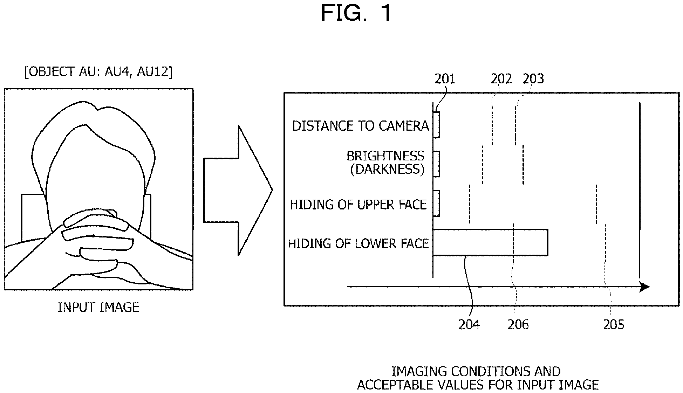

FIG. 1 is a diagram illustrating an example of a problematic point relevant to a conventional AU estimation technique. By focusing on an AU 4 and an AU 12, FIG. 1 illustrates a state of elements of imaging conditions for an input image, which is a face image obtained by imaging a face of a person, and acceptable values of imaging conditions for each AU.

Here, the element of imaging conditions is, for example, a feature relating to at least one of a distance between a person who is a subject and a camera, brightness or darkness, or hiding of an upper face and a lower face, as illustrated in FIG. 1. In addition, the element of imaging conditions may be, for example, a feature relating to at least one of the resolution of the face image or the face direction in the face image, but is not limited to these examples.

Note that the distance to the camera as an element of imaging conditions is, for example, a feature related to resolution. For the distance to the camera, for example, facial landmark detection is applied to the face image to detect the positions of two eyes, a relationship between the distance between the two eyes and the distance to the camera is measured in advance, and the distance to the camera is calculated from the positions of the two eyes, based on this relationship.

In addition, the brightness or darkness as an element of imaging conditions is, for example, a feature related to illumination and may be an average value of luminosity of pixels in the face image.

In addition, the hiding of the upper face and the lower face as an element of imaging conditions is, for example, a feature related to the hiding and may be a ratio of the hidden area to the area of the upper face or the lower face. In addition, the hiding of the upper face and the lower face is estimated using a machine learning model generated by training data constituted by, for example, "a face image with hiding of the upper face or lower face" and "the ratio of the hidden area to the area of the upper face or lower face". Note that, instead of the units of the upper face and the lower face, for example, finer regions obtained by conducting Voronoi division on 68 points generally defined as facial landmarks may be assigned as units.

In addition, the state of the element of imaging conditions is, for example, a numerical value or the like indicating a state of the element of imaging conditions. In addition, the acceptable value of imaging conditions for each AU is, for example, a threshold value such as an upper limit or a lower limit desired for precisely estimating each AU. The acceptable value is designated for each AU.

In the example in FIG. 1, the state of the distance to the camera, which is an element of imaging conditions, is indicated by a state 201. In addition, acceptable values of the distance to the camera for the AU 4 and the AU 12 are indicated by an acceptable value 202 and an acceptable value 203, respectively. Here, for example, the AU 4 is a motion of lowering the inner eyebrow, and the AU 12 is a motion of raising the mouth corner. In the example in FIG. 1, the acceptable value is assumed as the upper limit and is designated in such a manner that the AU is precisely estimated if the state of the element of imaging conditions is within the acceptable value. Therefore, in the example in FIG. 1, for the three elements of the distance to the camera, the brightness or darkness, and hiding of the upper face, both of the AU 4 and the AU 12 are within the acceptable values. However, since a state 204 of hiding of the lower face is within an acceptable value 205 for the AU 4 but exceeds an acceptable value 206 for the AU 12, the AU 12 may be unlikely to be precisely estimated.

Therefore, in the example in FIG. 1, it is considered desirable to present the hiding of the lower face as an element of imaging conditions suitable to be improved. However, for example, in a case where an imaging condition suitable to be improved is intended to be presented for the AU 4, it is presented that there is no imaging condition suitable to be improved. On the other hand, in a case where an imaging condition suitable to be improved is intended to be presented for the AU 12, the imaging condition suitable to be improved is presented as hiding of the lower face. Accordingly, it is not sufficient to only present an imaging condition suitable to be improved for a particular AU. Although only two kinds of AUs are listed in the example in FIG. 1, actually, there are more kinds of AUs, and it is desired to present imaging conditions suitable to be improved in consideration of these AUs.

Thus, an object of the present embodiment is to present a problematic point in imaging conditions suitable to be improved for a plurality of AUs. Note that the plurality of AUs may be all the AUs, or may be only the AUs for which estimation is to be performed.

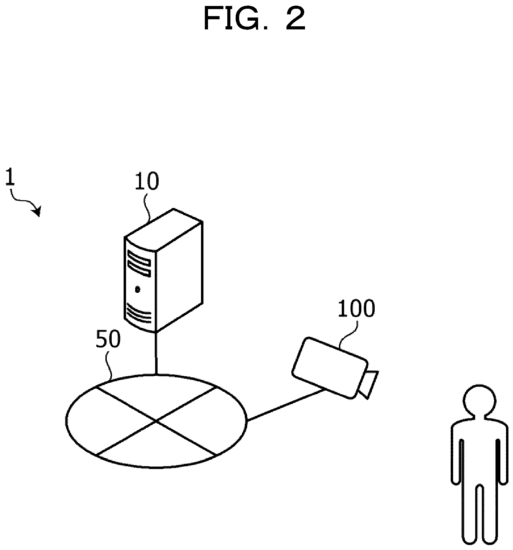

Next, a configuration of an information processing system for presenting a problematic point in imaging conditions suitable to be improved for a plurality of AUs will be described. FIG. 2 is a diagram illustrating an exemplary configuration of an information processing system according to the present embodiment. As illustrated in FIG. 2, the information processing system 1 is a system in which an information processing device 10 and a camera device 100 are coupled via a network 50 so as to be able to communicate with each other.

For example, various communication networks such as an intranet used in a facility where a person as an object is present, or the like can be adopted as the network 50 regardless of whether the network is wired or wireless. In addition, as the network 50, instead of a single network, an intranet and the Internet may be configured via a network device such as a gateway or some other device (not illustrated), for example. Note that, in a case where the information processing device 10 and the camera device 100 are directly coupled, or in a case where the information processing device 10 incorporates a camera function equivalent to that of the camera device 100, the network 50 does not have to be included in the information processing system 1.

The information processing device 10 may be, for example, a desktop personal computer (PC), a notebook PC, or the like, or may be a mobile terminal such as a smartphone or a tablet PC.

For example, the information processing device 10 acquires a video in which a face of a person is imaged by the camera device 100, detects the face of the person included in the video, using an existing technique, and estimates a state of elements of imaging conditions for the face image from the detected face image. Note that the existing technique may include, for example, techniques such as You Only Look Once (YOLO), a Single Shot Multibox Detector (SSD), and a Faster Region-based (R)-convolutional neural network (CNN) using deep learning.

In addition, for example, the information processing device 10 changes the estimated state of the elements of imaging conditions so as to virtually improve the estimated state. Then, for example, the information processing device 10 estimates prediction errors for each AU by inputting the virtually improved state of the elements of imaging conditions to a machine learning model. For example, the machine learning model is generated through training for each AU, with the state of elements of imaging conditions for the face image as features and errors in estimated values with respect to ground truth values of the intensities of the AUs as ground truth data. Note that training and generation of the machine learning model may be performed by the information processing device 10 or may be performed by another information processing device.

Then, for example, the information processing device 10 determines whether or not all the prediction errors for each AU satisfy predetermined criteria and specifies and presents an element of imaging conditions suitable to be improved on the face image.

Note that FIG. 2 illustrates the information processing device 10 as one computer. However, for example, the information processing device 10 may be a distributed computing system constituted by a plurality of computers. Alternatively, the information processing device 10 may be a cloud computer device managed by a service provider that provides cloud computing services.

The camera device 100 is, for example, a camera for imaging a person. A video captured by the camera device 100 is transmitted to the information processing device 10 at any time or at a predetermined timing. Note that, as described above, the camera device 100 may be formed as a camera function built in the information processing device 10.

### (Functional Configuration of Information Processing Device 10)

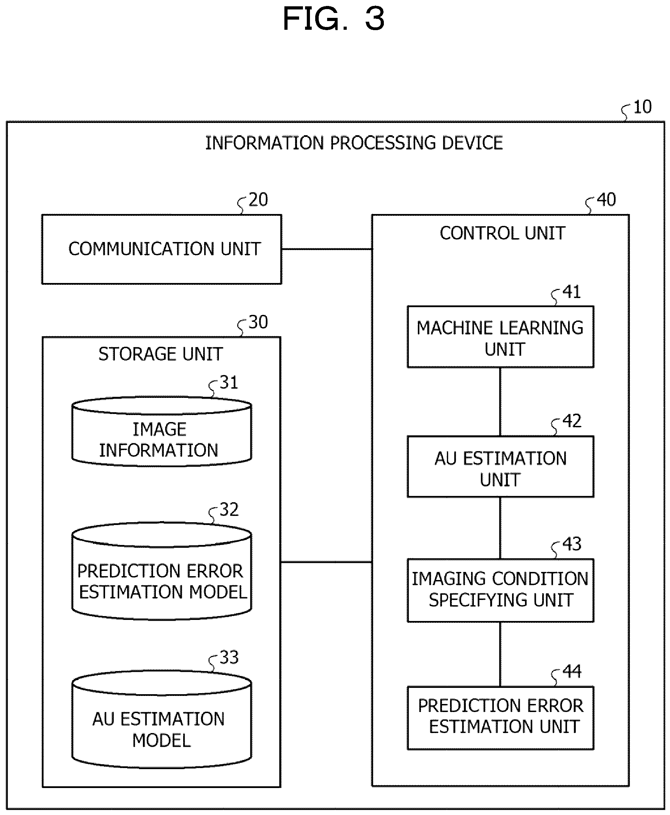

Next, a functional configuration of the information processing device 10 serving as an executing host of the present embodiment will be described. FIG. 3 is a block diagram illustrating an exemplary configuration of the information processing device 10 according to the present embodiment. As illustrated in FIG. 3, the information processing device 10 includes a communication unit 20, a storage unit 30, and a control unit 40.

The communication unit 20 is a processing unit that controls communication with other devices such as the camera device 100 and is a communication interface such as a network interface card or a universal serial bus (USB) interface, for example.

The storage unit 30 has a function of storing various types of data and a program executed by the control unit 40 and is implemented by a storage device such as a memory or a hard disk, for example. The storage unit 30 stores, for example, image information 31, a prediction error estimation model 32, and an AU estimation model 33.

The image information 31 stores, for example, a video captured by the camera device 100, that is, a plurality of captured images that is a series of frames of a moving image.

The prediction error estimation model 32 stores, for example, information regarding a machine learning model for estimating, as a prediction error, an error in an estimated value with respect to a ground truth value of the intensity of the AU from a state of an element of imaging conditions for the face image, and a parameter for constructing the model. The machine learning model, that is, the prediction error estimation model is generated through machine learning with states of elements of imaging conditions for the face image as features and errors in estimated values with respect to ground truth values of the intensities of the AUs as ground truth labels, for example. Note that the prediction error estimation model may be generated for each AU. In addition, the prediction error estimation model may be generated by the information processing device 10 or may be trained and generated by another information processing device.

The AU estimation model 33 stores, for example, information regarding a machine learning model for estimating the occurrence intensity of the AU from a face image in which a face of a person is imaged, and a model parameter for constructing the machine learning model. The machine learning model, that is, the AU estimation model is generated through machine learning with face images in which a face of a person is imaged by the camera device 100 as features and the occurrence intensities of the AUs as ground truth labels, for example. Note that the AU estimation model may be generated for each AU. In addition, the AU estimation model may be generated by the information processing device 10 or may be trained and generated by another information processing device.

Note that the information stored in the storage unit 30 described above is merely an example, and the storage unit 30 can also store diverse types of information other than the information described above.

The control unit 40 is a processing unit that takes overall control of the information processing device 10 and is a processor or the like, for example. The control unit 40 includes a machine learning unit 41, an AU estimation unit 42, an imaging condition specifying unit 43, a prediction error estimation unit 44, and the like. Note that each processing unit is an example of an electronic circuit included in the processor, or an example of a process executed by the processor.

For example, the machine learning unit 41 trains and generates a prediction error estimation model that is a machine learning model, for each AU, with states of elements of imaging conditions for a face image as features and errors in estimated values with respect to ground truth values of the intensities of the AUs as ground truth data. Note that, for example, a neural network that is an existing technique can be used for training of the machine learning model. In addition, the ground truth data may be calculated based on the ground truth value and the estimated value of the AU intensity estimated from the face image by the AU estimation unit 42. Furthermore, information regarding the generated prediction error estimation model is stored in the prediction error estimation model 32, for example. In addition, in a case where the machine learning model is trained and generated by a different information processing device other than the information processing device 10, the information processing device 10 may not include the machine learning unit 41.

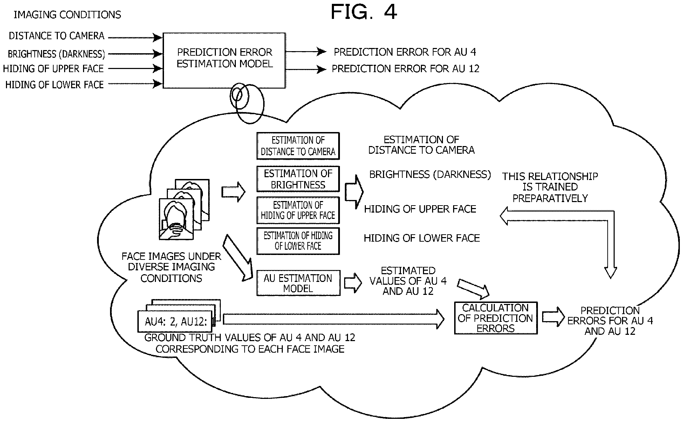

FIG. 4 is a diagram illustrating an example of a method for training the prediction error estimation model according to the present embodiment. As illustrated in FIG. 4, for example, when a state of an element of imaging conditions is input, the machine learning unit 41 trains and generates a prediction error estimation model designed to output a prediction error that is an error in an estimated value with respect to a ground truth value of the intensity of each AU. Note that, in the example in FIG. 4, only errors for the AU 4 and the AU 12 are illustrated as the prediction errors output from the prediction error estimation model, but the prediction error of each of the other AUs may be output from the prediction error estimation model.

As illustrated in FIG. 4, first, face images under diverse imaging conditions and ground truth values of the intensities of the respective AUs corresponding to each face image are prepared, for example. In the example in FIG. 4, only the ground truth values for the AU 4 and the AU 12 are illustrated, but a ground truth value of the intensity of each of the other AUs is also prepared.

Then, for example, the imaging condition specifying unit 43 specifies the state of each element of imaging conditions from each face image, using an existing technique. In addition, the AU estimation unit 42 estimates the intensity of each AU from each face image, using the AU estimation model. In addition, a prediction error is calculated from the estimated value of the intensity of each AU that has been estimated, and the ground truth value of the intensity of each AU.

Then, for example, the machine learning unit 41 conducts training with the specified state of each element of imaging conditions as a feature and the calculated prediction error as ground truth data and generates a prediction error estimation model.

The AU estimation unit 42 estimates the intensity of each AU from, for example, a video captured by the camera device 100, strictly, captured images. This means, for example, that the AU estimation unit 42 estimates an AU indicating a motion on the face involved in expressing a facial expression defined based on anatomical knowledge on facial muscles, using the AU estimation model. The AU estimation model is a machine learning model generated through training with the face images as features and the occurrence intensities of the AUs as ground truth labels. Note that AU estimation may be performed individually for all 44 kinds of AUs or for AUs of kinds as objects to be estimated and may be represented by numerical values of 0 to 5. In addition, the number of AUs corresponding to one facial expression is not limited to one, and a plurality of AUs may sometimes correspond to one facial expression.

For example, the imaging condition specifying unit 43 specifies a first state of elements of imaging conditions from a first face image, using an existing technique. In addition, for example, the imaging condition specifying unit 43 generates a second state of the elements of the imaging conditions changed such that the first state is improved.

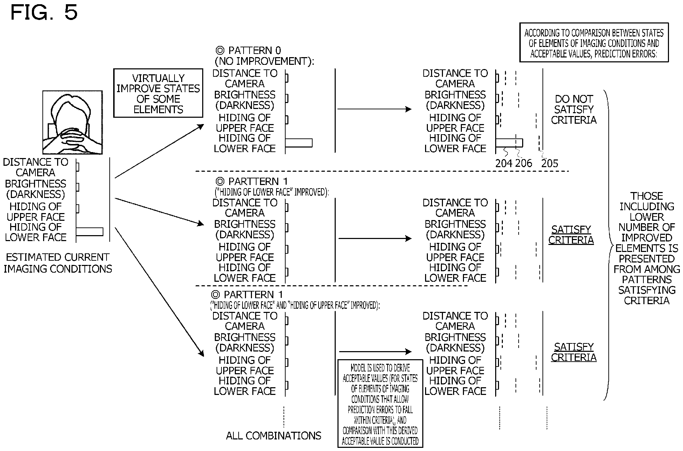

Furthermore, for example, the imaging condition specifying unit 43 determines whether or not all the prediction errors for each AU estimated by the prediction error estimation unit 44 satisfy predetermined criteria. Then, for example, the imaging condition specifying unit 43 specifies an element of the imaging conditions suitable to be improved on the first face image, based on the determination result as to whether or not all the prediction errors for each AU satisfy the predetermined criteria. Note that the specified element of the imaging conditions suitable to be improved may include, for example, a combination of elements of the imaging conditions whose prediction errors for each AU all satisfy the predetermined criteria and that include a lowest number of elements of the imaging conditions changed so as to be improved. This will be specifically described with reference to FIG. 5.

FIG. 5 is a diagram illustrating an example of a method for presenting elements of imaging conditions according to the present embodiment. As illustrated in FIG. 5, first, for example, the imaging condition specifying unit 43 virtually improves states of some elements in the first state of elements of the imaging conditions specified from the face image and generates the second state of the elements of the imaging conditions. In such improvements, improvements are made based on patterns 1, 2, ... that improve at least one element in the first state of the elements of the imaging conditions, as illustrated in FIG. 5. Note that, in the example in FIG. 5, for convenience, a pattern 0 that does not improve the first state of the elements of the imaging conditions is also illustrated. In addition, in the example in FIG. 5, the patterns are illustrated so as to improve all the combinations of the elements of the imaging conditions, but an element of the imaging conditions that obviously does not have to be improved may be excluded from the objects to be improved, using a threshold value or the like.

Next, for example, the imaging condition specifying unit 43 calculates, for each pattern, acceptable values for the states of the elements of the imaging conditions that allow the prediction errors to fall within the criteria, using the prediction error estimation model, and compares the calculated acceptable values with the second state of the elements of the imaging conditions changed so as to be improved.

Next, for example, the imaging condition specifying unit 43 determines whether or not the second state is within the acceptable values and satisfies the criteria for all the object AUs, based on a comparison result between the second state of the elements of the imaging conditions changed so as to be improved and the acceptable values. Then, for example, the elements of the imaging conditions including a lowest number of improved elements of the imaging conditions among the patterns satisfying the criteria may be presented as elements of the imaging conditions suitable to be improved.

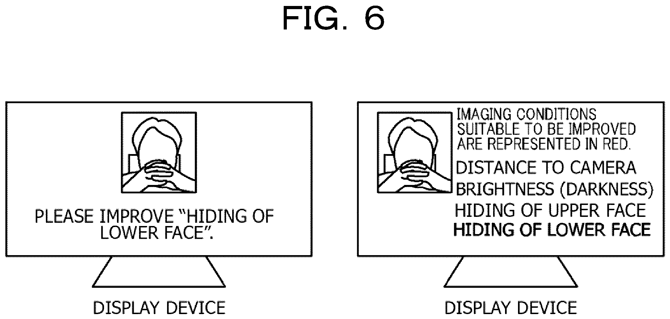

In addition, for example, the imaging condition specifying unit 43 presents the specified elements of the imaging conditions suitable to be improved on the first face image. FIG. 6 is a diagram illustrating an example of presentation of elements of imaging conditions according to the present embodiment. FIG. 6 depicts an example in which an element of imaging conditions suitable to be improved on the face image is presented by text via a display device. However, an element of imaging conditions suitable to be improved may be presented so as to be more easily visually grasped not only by text but also by figures, decorations, and the like.

As illustrated on the left side of FIG. 6, the imaging condition specifying unit 43 presents an element of imaging conditions suitable to be improved on the face image, namely, hiding of the lower face in the example in FIG. 6. In addition, as illustrated on the right side of FIG. 6, while all the elements of imaging conditions are illustrated, an element of the imaging conditions suitable to be improved on the face image may be illustrated with its character color decorated.

Note that the determination as to whether the prediction errors for each AU satisfy the criteria may be made by comparing the prediction errors output by inputting the second state to the prediction error estimation model for each AU with preset criteria for the prediction errors for each AU.

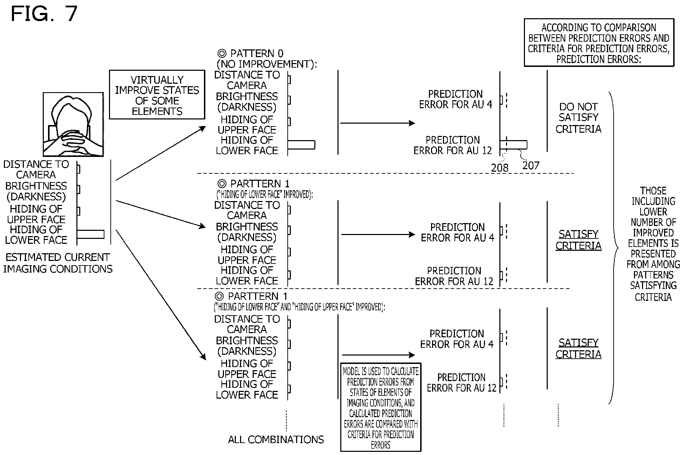

FIG. 7 is a diagram illustrating an example of a method for determining a prediction error according to the present embodiment. The method for determining the prediction error illustrated in FIG. 7 is similar to the method illustrated in FIG. 5 up to virtually improving the states of some elements in the first state of the elements of the imaging conditions specified from the face image, using each pattern, and generating the second state of the elements of the imaging conditions.

Next, for example, the imaging condition specifying unit 43 calculates prediction errors by inputting the second state of the elements of the imaging conditions changed so as to be improved to the prediction error estimation model for each pattern and compares the calculated prediction errors with preset criteria for the prediction errors. In FIG. 7, for example, the calculated prediction error is indicated as a prediction error 207, and the preset criterion for the prediction error is indicated as a criterion 208.

Next, for example, the imaging condition specifying unit 43 determines, for all the object AUs, whether or not the calculated prediction errors are within the criteria and satisfy the criteria, based on a comparison result between the calculated prediction errors and the criteria for the prediction errors. Then, for example, the elements of the imaging conditions including a lowest number of improved elements of the imaging conditions among the patterns satisfying the criteria may be presented as elements of the imaging conditions suitable to be improved.

In addition, for example, besides the elements of the imaging conditions suitable to be improved, the imaging condition specifying unit 43 may present a course of determination, such as the states of the elements of the imaging conditions changed so as to be improved, the acceptable values for the states of the elements of the imaging conditions, and the criteria for the prediction errors described with reference to FIGs. 5 and 7.

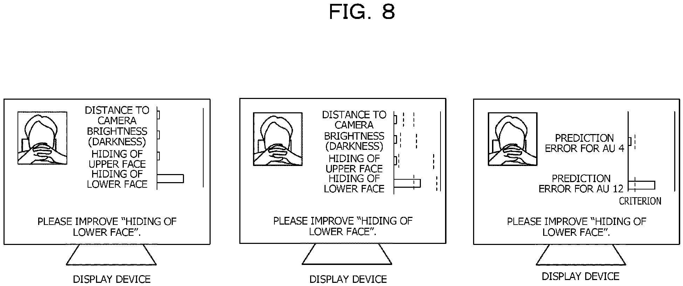

FIG. 8 is a diagram illustrating an example of visualization of a course of determination according to the present embodiment. FIG. 8 depicts an example in which an element of imaging conditions suitable to be improved on the face image, and the like are presented by text, figures, and the like via a display device. As illustrated on the left side of FIG. 8, besides the elements of the imaging conditions suitable to be improved, the states of the elements of the imaging conditions changed so as to be improved may be presented.

In addition, as illustrated in the center of FIG. 8, besides the elements of the imaging conditions suitable to be improved, the states of the elements of the imaging conditions changed so as to be improved and the acceptable values for the states of the elements of the imaging conditions may be presented. This is presentation fitting to a case of using the acceptable value-based determination method described with reference to FIG. 5.

In addition, as illustrated on the right side of FIG. 8, besides the elements of the imaging conditions suitable to be improved, the prediction errors calculated using the prediction error estimation model and the criteria for the prediction errors may be presented. This is presentation fitting to a case of using the prediction error-based determination method described with reference to FIG. 7. Note that, in FIG. 8, only the presentation for the AU 4 and the AU 12 is illustrated, but the prediction errors and the like may be presented for all the AUs.

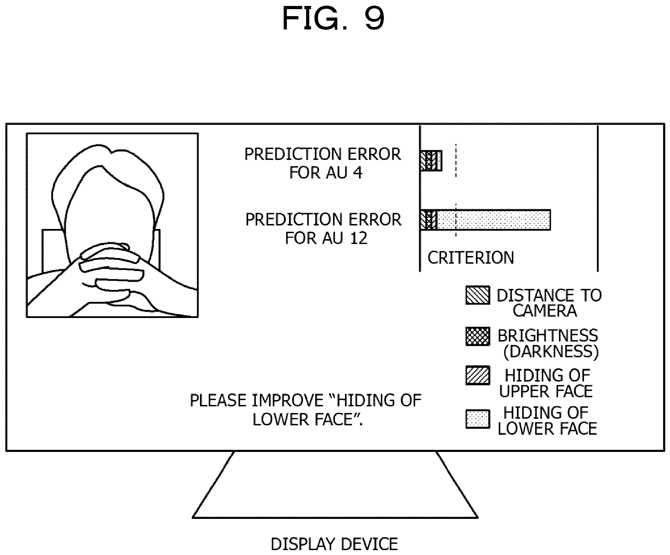

In addition, for example, the imaging condition specifying unit 43 may calculate and present a percentage of the magnitude of influence on the prediction errors that at least one of the elements of the imaging conditions has had. FIG. 9 is a diagram illustrating an example of visualization of imaging conditions that have affected the prediction errors according to the present embodiment. FIG. 9 depicts an example in which the percentage of the magnitude of the influence on the prediction errors that the elements of the imaging conditions have had is presented by text, drawings, and decorations via a display device.

As illustrated in FIG. 9, the percentage of the magnitude of the influence on the prediction errors that the elements of the imaging conditions have had may be presented for each AU and element. Note that, in FIG. 9, only the presentation for the AU 4 and the AU 12 is illustrated, but the prediction errors and the like may be presented for all the AUs.

In addition, the percentage of the magnitude of the influence on the prediction errors that the elements of the imaging conditions have had can be calculated, for example, as follows. First, the imaging condition specifying unit 43 specifies states of elements of the imaging conditions from the input image that is a face image, using an existing technique, for example. Then, for example, the imaging condition specifying unit 43 executes the following processing on each specified element i.

First, the imaging condition specifying unit 43 inputs elements in a state of the imaging conditions in which the state of the element i is kept unchanged and the states of the elements other than the element i are optimized, to the prediction error estimation model, to calculate the prediction errors and assigns the prediction errors as the prediction errors based on the influence of the element i alone. More specifically, for example, when the element i is assumed as "hiding of the lower face", "distance to the camera" altered to 0, "brightness" altered to 0, and "hiding of the upper face" altered to 0 are input to the prediction error estimation model while the state of "hiding of the lower face" is kept unchanged, and the prediction error is acquired. The prediction error is treated as a prediction error based on the influence of "hiding of the lower face" alone. In addition, the percentage of the prediction errors based on the influence of the element i alone for each element i is treated as the percentage of the magnitude of the influence on the prediction errors. More specifically, for example, the percentage of the prediction error based on the influence of "hiding of the lower face" alone, the prediction error based on the influence of "distance to the camera" alone, and ... are treated as the percentage of the magnitude of the influence on the prediction errors.

Returning to the description of FIG. 3, for example, the prediction error estimation unit 44 inputs, for each AU, the second state generated by the imaging condition specifying unit 43 to the prediction error estimation model trained and generated by the machine learning unit 41 and estimates the prediction errors for each AU.

### (Flow of Processing)

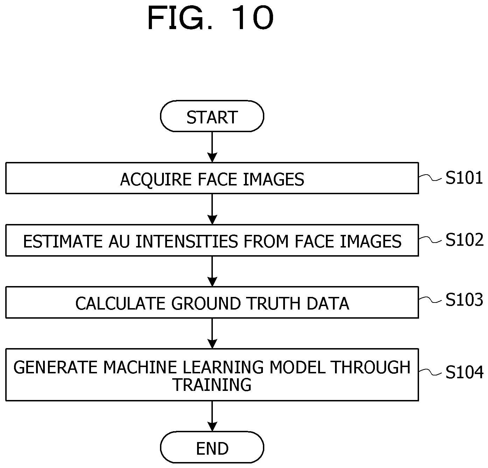

Next, a flow of training processing of the prediction error estimation model according to the present embodiment will be described with reference to FIG. 10. FIG. 10 is a flowchart illustrating an example of a flow of training processing according to the present embodiment. The training processing illustrated in FIG. 10 may be executed by the information processing device 10, or may be executed by another information processing device.

First, as illustrated in FIG. 10, the information processing device 10 acquires, from the image information 31, face images in which a face of a person is imaged by the camera device 100 under diverse imaging conditions, for example (step S101). In addition, at this time, the information processing device 10 may specify states of elements of the imaging conditions for the acquired face image, using an existing technique, or the states may be specified in advance, or ground truth values may be prepared and acquired in advance.

Next, the information processing device 10 estimates the intensity of each AU from each face image acquired in step S101, using, for example, the AU estimation model (step S102). Note that an existing technique can be used to estimate the AU intensity in step S102.

Next, for example, the information processing device 10 calculates a prediction error to be treated as ground truth data for the prediction error estimation model for each face image, from the estimated value of each AU intensity estimated in step S102 and the ground truth value of each AU intensity (step S103). In the calculation of the prediction errors in step S103, for example, an absolute error between the estimated value and the ground truth value of the AU intensity is calculated for each AU, and this can be treated as the prediction error.

Next, the information processing device 10 trains and generates a prediction error estimation model, for example, with the face images acquired in step S101 as features and the prediction errors calculated in step S103 as ground truth data for each face image (step S104). Note that information regarding the generated prediction error estimation model is stored in the prediction error estimation model 32. After the execution of step S104, the training processing illustrated in FIG. 10 ends.

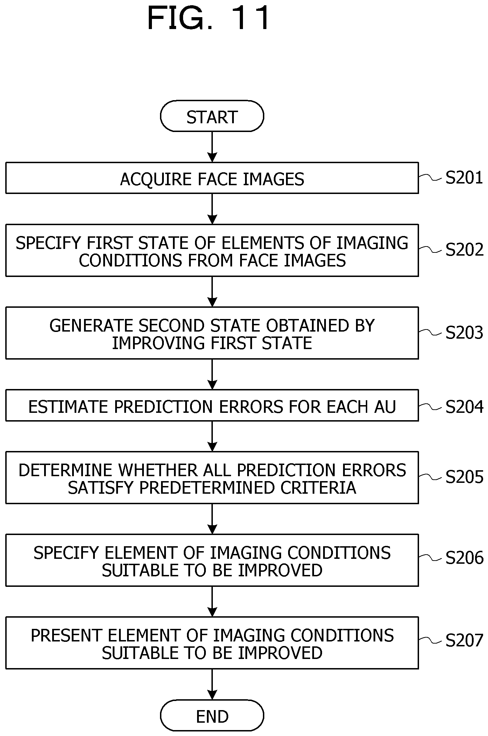

Next, a flow of presentation processing for elements of imaging conditions suitable to be improved according to the present embodiment will be described with reference to FIG. 11. FIG. 11 is a flowchart illustrating an example of a flow of presentation processing according to the present embodiment. The presentation processing illustrated in FIG. 11 is executed by the information processing device 10 and may be executed, for example, at regular time intervals or each time a video is received from the camera device 100.

First, as illustrated in FIG. 11, the information processing device 10 acquires, for example, face images in which a face of a person is imaged by the camera device 100, from the image information 31 (step S201). Note that, in the presentation processing illustrated in FIG. 11, since the video captured by the camera device 100 is processed in substantially real time, the video is transmitted from the camera device 100 and stored in the image information 31 at any time.

Next, the information processing device 10 specifies the first state of elements of imaging conditions from each face image acquired in step S201, using, for example, an existing technique (step S202).

Next, for example, the information processing device 10 virtually improves the specified first state of the elements of the imaging conditions and generates the second state of the elements of the imaging conditions (step S203). This may be executed based on each pattern that improves at least one element of the elements of the imaging conditions in the first state, as described with reference to FIG. 5.

Next, the information processing device 10 inputs, for example, the second state of the elements of the imaging conditions generated in step S203 to the prediction error estimation model and estimates prediction errors for each AU (step S204). The prediction error estimation model may be a machine learning model trained and generated through the training processing illustrated in FIG. 10.

Next, for example, the information processing device 10 determines whether all the prediction errors estimated in step S204 satisfy predetermined criteria (step S205). This includes, for example, calculating acceptable values for the states of the elements of the imaging conditions that allow the prediction errors to fall within the criteria, using the prediction error estimation model, and the acceptable values are treated as the criteria, as described with reference to FIG. 5. In addition, for example, by supposing that a plurality of elements of the imaging conditions is less likely to deteriorate at the same time, only one element of the imaging conditions may be gradually deteriorated, and a state of the element when the prediction error exceeds the criterion may be assigned as an acceptable value. Then, the virtually improved states of the elements of the imaging conditions are compared with the acceptable values of all the AUs, and if the virtually improved states of the elements of the imaging conditions fall within the acceptable values of all the AUs, it is determined that the prediction errors of all the AUs satisfy the criteria.

Next, the information processing device 10 specifies an element of the imaging conditions suitable to be improved, based on the determination result in step S205, for example (step S206). This includes, for example, specifying a combination of elements whose prediction errors satisfy the criteria and that include a lowest number of improved elements, as elements suitable to be improved in the imaging conditions, that is, a problematic point.

In addition, for example, in a case where there is a plurality of combinations satisfying the requirement that the combination of elements whose prediction errors satisfy the criteria includes a lowest number of improved elements, all or one of the combinations is specified. Furthermore, in a case of specifying one from a plurality of combinations, in order to facilitate improvement, difficulty levels in improvement may be allocated to the elements of the imaging conditions in advance, and a combination including a lowest sum of difficulty levels may be specified.

More specifically, for example, the difficulty levels in improvement are set for each element such that the larger the numerical value, the higher the difficulty level, in such a manner that the brightness: difficulty level 3, the distance to the camera: difficulty level 4, the hiding of the upper face: difficulty level 2, and the hiding of the lower face: difficulty level 2. Then, for example, it is assumed that the combinations satisfying the requirement are a first combination "the brightness, the distance to the camera" and a second combination "hiding of the upper face, hiding of the lower face". At this time, the sum of the difficulty levels of the first combination is 3 + 4 = 7 and the sum of the difficulty levels of the second combination is 2 + 2 = 4. Since the second combination is lower, "hiding of the upper face, hiding of the lower face" is specified as elements suitable to be improved.

Next, the information processing device 10 presents the element of the imaging conditions suitable to be improved, which have been specified in step S206, for example (step S207). After the execution of step S207, the presentation processing illustrated in FIG. 11 ends.

### (Effects)

As described above, the information processing device 10: acquires a first face image of a person; specifies a first state of elements of an imaging condition from the first face image; generates a second state of the elements of the imaging condition changed such that the first state is improved; inputs the second state to a machine learning model generated through training for each of AUs that represent movements of facial expression muscles, with states of the elements of the imaging condition for a face image as features and errors in estimated values with respect to ground truth values of intensities of the AUs as ground truth data, to estimate prediction errors for each of the AUs; determines whether or not predetermined criteria are satisfied by all of the prediction errors for each of the AUs; and specifies the elements of the imaging condition suitable to be improved on the first face image, based on a determination result as to whether or not the predetermined criteria are satisfied.

In this manner, the information processing device 10 virtually improves the imaging conditions estimated from the face image and estimates prediction errors for each AU relevant to the improved imaging conditions. Then, the information processing device 10 specifies a problematic point in the imaging conditions, based on the determination result as to whether or not all the prediction errors satisfy the criteria. This may allow the information processing device 10 to present a problematic point in imaging conditions for a camera device in AU estimation.

In addition, the processing of specifying the elements of the imaging condition suitable to be improved on the first face image, which is executed by the information processing device 10, includes processing of specifying a combination of the elements of the imaging condition of which the prediction errors for each of the AUs all satisfy the predetermined criteria and that include a lowest number of the elements of the imaging condition changed so as to be improved, as the elements of the imaging condition suitable to be improved on the first face image, based on the determination result as to whether or not the predetermined criteria are satisfied.

This may allow the information processing device 10 to present a problematic point in imaging conditions for a camera device in AU estimation more appropriately.

In addition, the processing of determining whether or not the predetermined criteria are satisfied, which is executed by the information processing device 10, includes processing of calculating an acceptable value for the states of the elements of the imaging condition such that the prediction errors fall within the predetermined criteria, by using the machine learning model, and determining whether or not the predetermined criteria are satisfied, by comparing the acceptable value with the second state.

This may allow the information processing device 10 to present a problematic point in imaging conditions for a camera device in AU estimation more appropriately.

In addition, the processing of determining whether or not the predetermined criteria are satisfied, which is executed by the information processing device 10, includes processing of determining whether or not the predetermined criteria are satisfied, by comparing, for each of the AUs, the prediction errors with the criteria for the prediction errors for each of the AUs.

This may allow the information processing device 10 to present a problematic point in imaging conditions for a camera device in AU estimation more appropriately.

In addition, the processing of specifying the first state, which is executed by the information processing device 10, includes processing of specifying, as the first state, the features related to at least one of hiding of a face in the first face image, resolution of the first face image, illumination on the first face image, or a direction of the face.

This may allow the information processing device 10 to present a problematic point in imaging conditions for a camera device in AU estimation more appropriately.

In addition, the processing of specifying the first state, which is executed by the information processing device 10, includes processing of specifying, as the first state, the features related to the hiding of a particular region of the face in the first face image, as the features related to the hiding of the face.

This may allow the information processing device 10 to present a problematic point in imaging conditions for a camera device in AU estimation more appropriately.

In addition, the information processing device 10 executes processing of presenting the specified elements of the imaging condition suitable to be improved on the first face image by using at least one of text, figures, or decorations.

This may allow the information processing device 10 to present a problematic point in imaging conditions for a camera device in AU estimation in a more easy-to-see manner.

In addition, the information processing device 10 executes processing of presenting at least one of the first state, the second state, the prediction errors, or the predetermined criteria.

This may allow the information processing device 10 to present a problematic point in imaging conditions for a camera device in AU estimation in a more easy-to-see manner.

In addition, the information processing device 10 executes processing of calculating and presenting a percentage of magnitude of influence on the prediction errors that at least one of the elements of the imaging condition has had, based on the second state.

This may allow the information processing device 10 to present a problematic point in imaging conditions for a camera device in AU estimation in a more easy-to-see manner.

In addition, the information processing device 10 executes processing of estimating the intensities of the AUs from the face image, calculating the ground truth data, based on the estimated values of the intensities of the AUs that have been estimated, and the ground truth values, and conducting the training by using the elements of the imaging condition for the face image as the features and the calculated ground truth data to generate the machine learning model.

This may allow the information processing device 10 to present a problematic point in imaging conditions for a camera device in AU estimation.

### (System)

Pieces of information including the processing procedures, the control procedures, the specific names, the various types of data, and the parameters described above or illustrated in the drawings may be changed as appropriate, unless otherwise noted. In addition, the specific examples, distribution, numerical values, and the like described in the exemplary embodiments are merely examples and may be changed as appropriate.

Furthermore, specific forms of separation and integration of components of each device are not limited to the forms illustrated in the drawings. For example, the imaging condition specifying unit 43 of the information processing device 10 in FIG. 3 may be separated into a plurality of processing units, or the AU estimation unit 42 and the prediction error estimation unit 44 of the information processing device 10 may be integrated into one processing unit. In other words, all or some of the components may be functionally or physically separated or integrated in any units, according to various types of loads, use situations, or the like. Moreover, all or any part of the individual processing functions of each device can be implemented by a central processing unit (CPU) and a program analyzed and executed by the CPU, or can be implemented as hardware by wired logic.

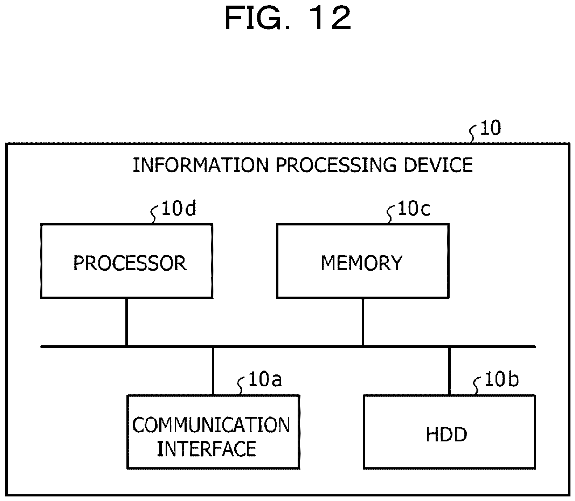

FIG. 12 is a diagram illustrating an exemplary hardware configuration of the information processing device 10 according to the present embodiment. As illustrated in FIG. 12, the information processing device 10 includes a communication interface 10a, a hard disk drive (HDD) 10b, a memory 10c, and a processor 10d. In addition, the individual units illustrated in FIG. 12 are coupled to each other by a bus or the like.

The communication interface 10a is a network interface card or the like and communicates with another server. The HDD 10b stores programs for operating each of the functions of the individual processing units and the information processing device 10 illustrated in FIG. 3 and the like, and a database (DB).

The processor 10d is a central processing unit (CPU), a micro processing unit (MPU), a graphics processing unit (GPU), or the like. In addition, the processor 10d may be implemented by an integrated circuit such as an application specific integrated circuit (ASIC), or a field programmable gate array (FPGA). The processor 10d is a hardware circuit that reads, from the HDD 10b or the like, a program that executes processing similar to that of each processing unit illustrated in FIG. 3 or the like, and loads the read program into the memory 10c to execute a process that implements each function described with reference to FIG. 3 or the like.

In addition, the information processing device 10 can also implement functions similar to the those of the above exemplary embodiments by reading the above program from a recording medium with a medium reading device and executing the above read program. Note that the program mentioned in another exemplary embodiment is not limited to being executed by the information processing device 10. For example, the above exemplary embodiments may be similarly applied also in a case where another information processing device executes the program or a case where another information processing device and the information processing device 10 cooperate to execute the program.

This program may be distributed via a network such as the Internet. In addition, this program may be recorded on a computer-readable recording medium such as a hard disk, a flexible disk (FD), a compact disc read only memory (CD-ROM), a magneto-optical disk (MO), a digital versatile disc (DVD), or the like and may be executed by being read from the recording medium by a computer.

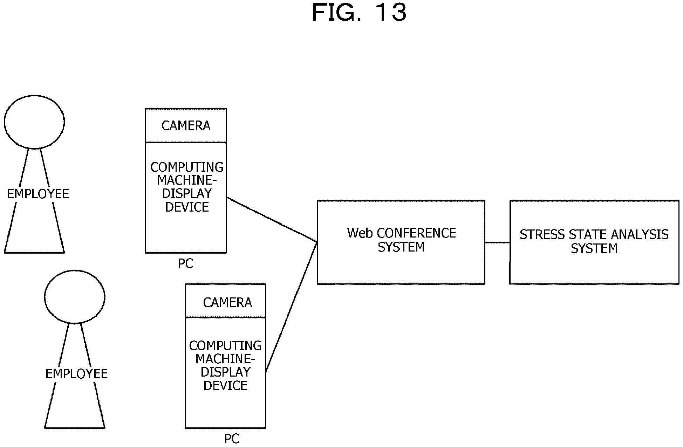

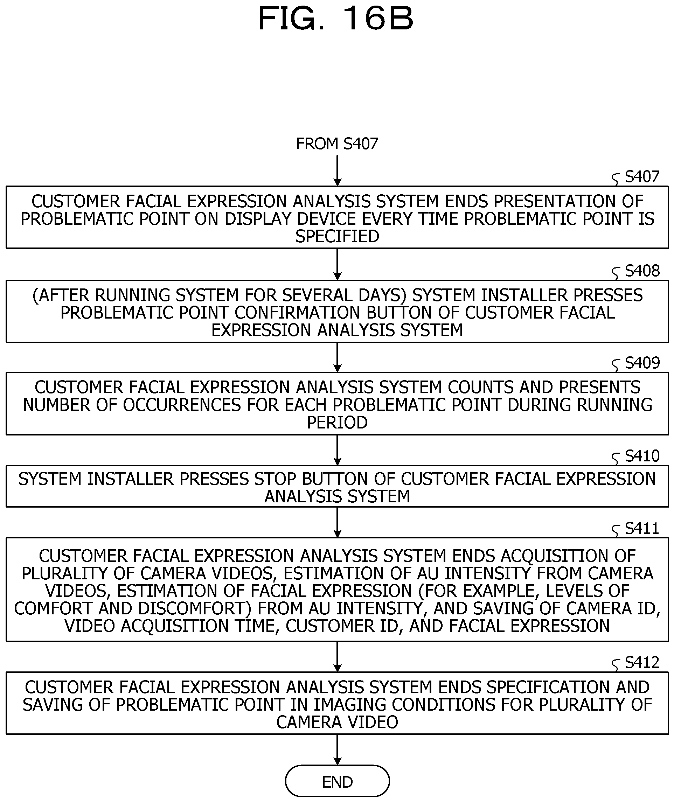

Furthermore, the present embodiment is applicable to a system or the like as will be described with reference to FIGs. 13 to 16A and 16B. FIG. 13 is a configuration diagram of a stress state analysis system for employees. The stress state analysis system illustrated in FIG. 13 is, for example, a system that acquires a facial expression of an employee during a web conference imaged by a front-facing camera of a PC of the employee via a web conference system and estimates a stress state from the facial expression, using an existing technique. This may allow, for example, the management department to grasp an employee in a high stress state and take an appropriate action. The present embodiment is applied to such a system that estimates a stress state, and for example, a problematic point in imaging conditions is presented to an employee during a web conference.

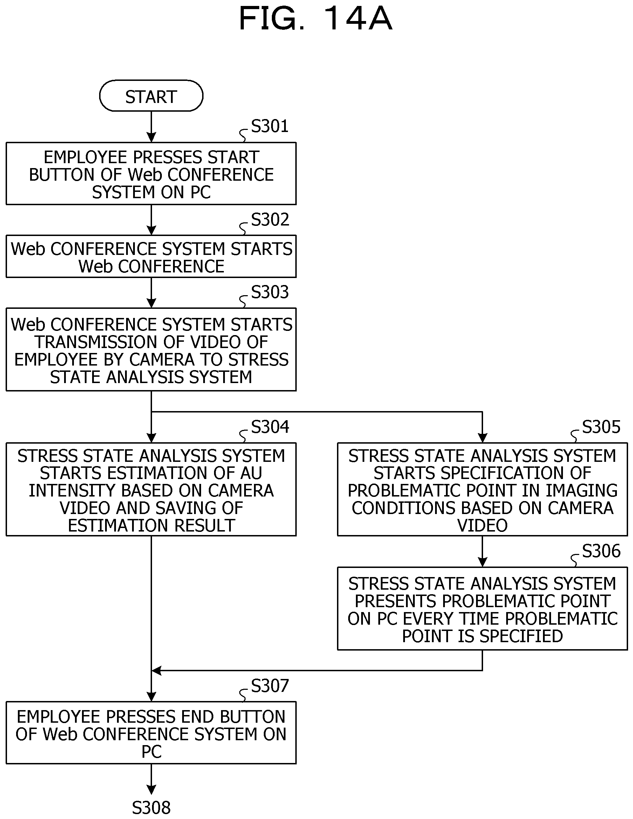

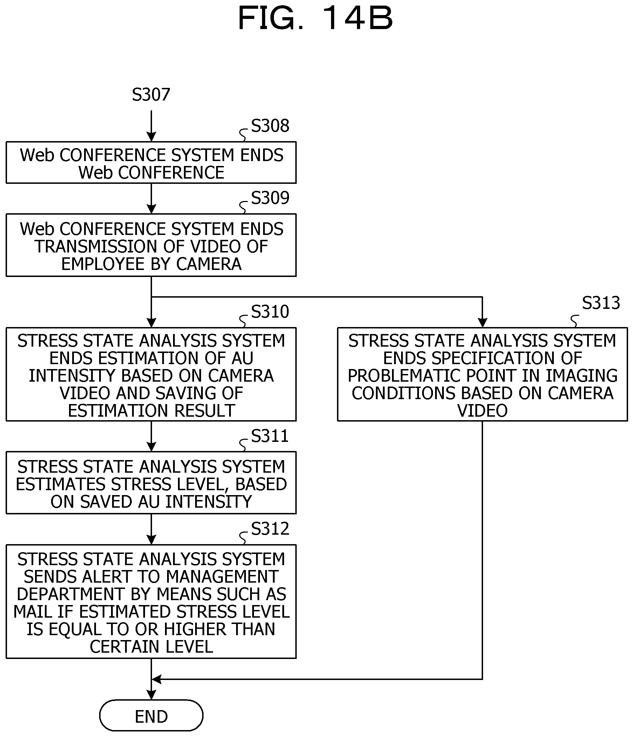

Next, a flow of processing by the stress state analysis system illustrated in FIG. 13 will be described with reference to FIGs. 14A and 14B. FIGs. 14A and 14B are operation flowcharts of the stress state analysis system. First, an employee presses a start button of the web conference system on the PC (step S301).

Next, the web conference system starts a web conference (step S302).

Next, the web conference system starts transmission of a video of the employee by a camera to the stress state analysis system (step S303).

Next, the stress state analysis system starts estimation of the AU intensity based on the camera video and saving of an estimation result (step S304).

In addition, the stress state analysis system starts specification of a problematic point in imaging conditions based on the camera video (step S305). Note that the estimation of the problematic point in imaging conditions is executed by the processing described with reference to FIGs. 5 and 11 and the like. Next, the stress state analysis system presents the problematic point on the PC every time the problematic point is specified (step S306). Alternatively, in order to reduce botheration of frequent presentation, the problematic point may be presented only when the same problematic point is specified a predetermined number of times or more within a predetermined period of time.

Next, the employee presses an end button of the web conference system on the PC (step S307).

Next, the web conference system ends the web conference (step S308).

Next, the web conference system ends transmission of the video of the employee by the camera (step S309).

Next, the stress state analysis system ends estimation of the AU intensity based on the camera video and saving of an estimation result (step S310). Next, the stress state analysis system estimates a stress level, based on the saved AU intensity (step S311). Next, if the estimated stress level is equal to or higher than a certain level, the stress state analysis system transmits an alert to the management department by means such as a mail (step S312).

In addition, the stress state analysis system ends specification of a problematic point in imaging conditions based on the camera video (step S313). After the execution of steps S312 and S313, the operation of the stress state analysis system illustrated in FIG. 14B ends.

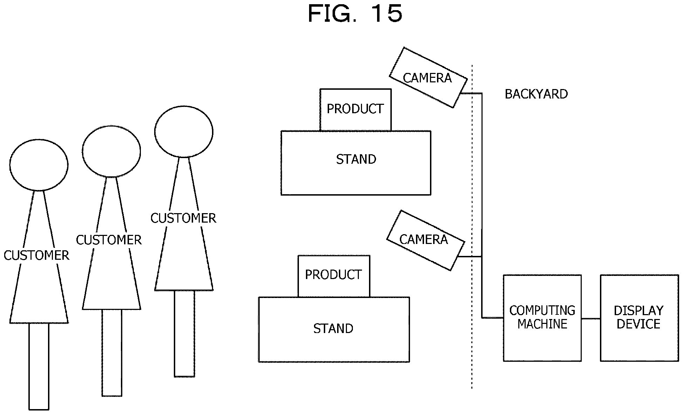

Another system to which the present embodiment is applicable will be described. FIG. 15 is a diagram illustrating a customer facial expression analysis system in a retail store. The customer facial expression analysis system illustrated in FIG. 15 is a system that, in a retail store, for example, images a facial expression of a customer with a plurality of cameras installed in the store and analyzes a difference in facial expressions depending on an area or a time of day in order to improve product arrangement, for example.

The customer facial expression analysis system presents a problematic point in imaging conditions by applying the present embodiment in each phase of "at the time of installation" and "after installation" of the cameras. For example, the customer facial expression analysis system presents a problematic point to a system installer in real time at the time of installing the cameras and supports the system installer such that appropriate installation can be achieved. In addition, after installing the cameras, the customer facial expression analysis system presents a problematic point with high frequency, based on the camera video obtained by imaging facial expressions of customers for several days and supports the system installer such that adjustments to achieve an appropriate installation can be made.

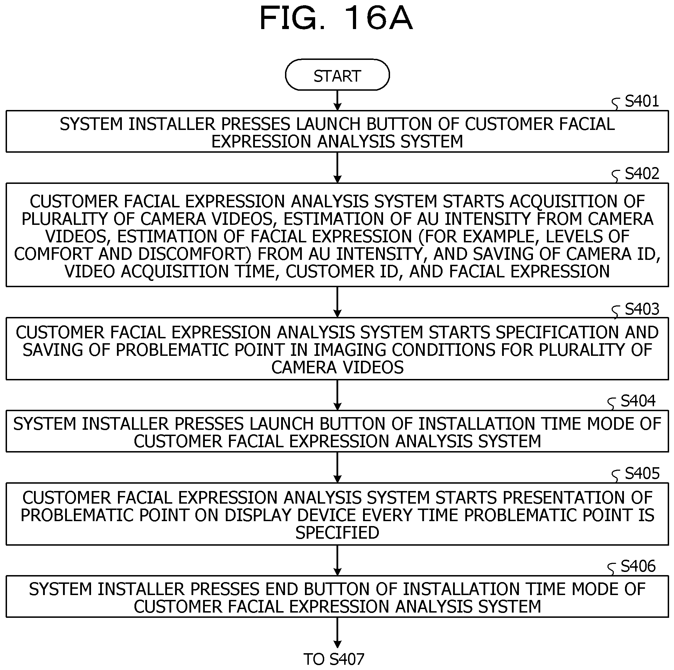

Next, a flow of processing by the customer facial expression analysis system illustrated in FIG. 15 will be described with reference to FIGs. 16A and 16B. FIGs. 16A and 16B are operation flowcharts of the customer facial expression analysis system. First, a system installer presses a launch button of the customer facial expression analysis system (step S401).

Next, the customer facial expression analysis system starts acquisition of a plurality of camera videos, estimation of the AU intensity from the camera videos, estimation of a facial expression from the AU intensity, and saving of a camera identifier (ID), a video acquisition time, a customer ID, and the facial expression (step S402). Here, the facial expression from the AU intensity is represented by, for example, the levels of comfort and discomfort. In addition, the camera ID and the customer ID are, for example, identifiers uniquely indicating the camera and the customer, respectively.

Next, the customer facial expression analysis system starts specification and saving of a problematic point in imaging conditions for the plurality of camera videos (step S403).

Next, the system installer presses a launch button of an installation time mode of the customer facial expression analysis system (step S404).

Next, the customer facial expression analysis system starts presentation of a problematic point on a display device every time the problematic point is specified (step S405).

Next, the system installer presses an end button of the installation time mode of the customer facial expression analysis system (step S406).

Next, the customer facial expression analysis system ends presentation of the problematic point on the display device every time the problematic point is specified (step S407).

Next, for example, after running the system for several days, the system installer presses a problematic point confirmation button of the customer facial expression analysis system (step S408).

Next, the customer facial expression analysis system counts and presents the number of occurrences for each problematic point during a running period (step S409). Note that the customer facial expression analysis system may save the camera videos and present the camera videos as specific problematic cases.

Next, the system installer presses a stop button of the customer facial expression analysis system (step S410).

Next, the customer facial expression analysis system ends acquisition of a plurality of camera videos, estimation of the AU intensity from the camera videos, estimation of a facial expression from the AU intensity, and saving of the camera ID, the video acquisition time, the customer ID, and the facial expression (step S411).

Next, the customer facial expression analysis system ends specification and saving of a problematic point in imaging conditions for the plurality of camera videos (step S412). After the execution of step S412, the operation of the customer facial expression analysis system illustrated in FIG. 16B ends.

## Claims

1. An information processing program for causing a computer to execute processing comprising:
acquiring a first face image of a person;
specifying a first state of elements of an imaging condition from the first face image;
generating a second state of the elements of the imaging condition changed such that the first state is improved;
inputting the second state to a machine learning model generated through training for each of action units (AUs) that represent movements of facial expression muscles, with states of the elements of the imaging condition for a face image as features and errors in estimated values with respect to ground truth values of intensities of the AUs as ground truth data, to estimate prediction errors for each of the AUs;
determining whether or not predetermined criteria are satisfied by all of the prediction errors for each of the AUs; and
specifying the elements of the imaging condition suitable to be improved on the first face image, based on a determination result as to whether or not the predetermined criteria are satisfied.

2. The information processing program according to claim 1, wherein
the specifying the elements of the imaging condition suitable to be improved on the first face image includes
specifying a combination of the elements of the imaging condition of which the prediction errors for each of the AUs all satisfy the predetermined criteria and that include a lowest number of the elements of the imaging condition changed so as to be improved, as the elements of the imaging condition suitable to be improved on the first face image, based on the determination result as to whether or not the predetermined criteria are satisfied.

3. The information processing program according to claim 1, wherein
the determining whether or not the predetermined criteria are satisfied includes:
calculating an acceptable value for the states of the elements of the imaging condition such that the prediction errors fall within the predetermined criteria, by using the machine learning model; and
determining whether or not the predetermined criteria are satisfied, by comparing the acceptable value with the second state.

4. The information processing program according to claim 1, wherein
the determining whether or not the predetermined criteria are satisfied includes
determining whether or not the predetermined criteria are satisfied, by comparing, for each of the AUs, the prediction errors with the criteria for the prediction errors for each of the AUs.

5. The information processing program according to claim 1, wherein
the specifying the first state includes
specifying, as the first state, the features related to hiding of a face in the first face image, resolution of the first face image, illumination on the first face image, or a direction of the face, or any combination of the hiding of the face in the first face image, the resolution of the first face image, the illumination on the first face image, and the direction of the face.

6. The information processing program according to claim 5, wherein
the specifying the first state includes
specifying, as the first state, the features related to the hiding of a particular region of the face in the first face image, as the features related to the hiding of the face.

7. The information processing program according to claim 1, for causing the computer to execute the processing comprising presenting the specified elements of the imaging condition suitable to be improved on the first face image by using text, a figure, or a decoration, or any combination of the text, the figure, and the decoration.

8. The information processing program according to claim 1, for causing the computer to execute the processing comprising presenting the first state, the second state, the prediction errors, or the predetermined criteria, or any combination of the first state, the second state, the prediction errors, and the predetermined criteria.

9. The information processing program according to claim 1, for causing the computer to execute the processing comprising calculating and presenting a percentage of magnitude of influence on the prediction errors that at least one of the elements of the imaging condition has had, based on the second state.

10. The information processing program according to claim 1, for causing the computer to execute the processing comprising:
estimating the intensities of the AUs from the face image;
calculating the ground truth data, based on the estimated values of the intensities of the AUs that have been estimated, and the ground truth values; and
conducting the training by using the elements of the imaging condition for the face image as the features and the calculated ground truth data to generate the machine learning model.

11. An information processing method implemented by a computer, information processing method comprising:
acquiring a first face image of a person;
specifying a first state of elements of an imaging condition from the first face image;
generating a second state of the elements of the imaging condition changed such that the first state is improved;
inputting the second state to a machine learning model generated through training for each of action units (AUs) that represent movements of facial expression muscles, with states of the elements of the imaging condition for a face image as features and errors in estimated values with respect to ground truth values of intensities of the AUs as ground truth data, to estimate prediction errors for each of the AUs;
determining whether or not predetermined criteria are satisfied by all of the prediction errors for each of the AUs; and
specifying the elements of the imaging condition suitable to be improved on the first face image, based on a determination result as to whether or not the predetermined criteria are satisfied.

12. An information processing device comprising:
a control unit configured to:
acquire a first face image of a person;
specify a first state of elements of an imaging condition from the first face image;
generate a second state of the elements of the imaging condition changed such that the first state is improved;
input the second state to a machine learning model generated through training for each of action units (AUs) that represent movements of facial expression muscles, with states of the elements of the imaging condition for a face image as features and errors in estimated values with respect to ground truth values of intensities of the AUs as ground truth data, to estimate prediction errors for each of the Aus;
determine whether or not predetermined criteria are satisfied by all of the prediction errors for each of the Aus; and
specify the elements of the imaging condition suitable to be improved on the first face image, based on a determination result as to whether or not the predetermined criteria are satisfied.
